# EUROPEAN PATENT APPLICATION

(11) **EP 1 464 561 A2**
(43) Date of publication of application: **06.10.2004**
(21) Application number: 04007565.7
(22) Date of filing: 29.03.2004
(51) Int. Cl.: B62D 1/19

(54) **Controlled energy absorbtion steering column**

(30) Priority: 31.03.2003 JP 2003093186; 09.03.2004 JP 2004065059
(71) Applicant: FUJI KIKO Co., Ltd., Kosai-shi, Shizuoka 431-0431 (JP)
(72) Inventor: Kondoh, Akira, Kosai-shi Shizuoka 431-0431 (JP); Hayashi, Syogo, Kosai-shi Shizuoka 431-0431 (JP)
(74) Representative: Grünecker, Kinkeldey, Stockmair & Schwanhäusser Anwaltssozietät

(57) **Abstract**

In an assembled state, a steering column (1) is supported movably on a vehicle body, and a holding member is mounted fixedly relative to the vehicle body. A sliding shaft (24) is formed with a portion having cross sections of different sizes, and is connected with the steering column. An actuating mechanism (25) shifts the position of the sliding shaft (24) inserted in an elongate hole (23) formed in the holding member (22). The hole is defined between opposite edges elongated in an elongate direction. When the steering column is moved by an impact load, the sliding shaft (24) is moved in the elongate direction in the elongate hole so that the sliding shaft contacts the opposite edges so as to absorb impact energy.

## Description

### BACKGROUND OF THE INVENTION

The present invention relates to an energy absorbing steering apparatus or steering column assembly for absorbing a column pressing load transmitted from a steering wheel to a collapsible steering column, variably in accordance with a magnitude of the column pressing load.

Various energy absorbing steering apparatuses have been developed to prevent a driver from damaging from an inertial secondary collision of the driver to a steering wheel which follows a primary collision of a vehicle to another vehicle or construction. Among such various energy absorbing steering apparatuses, a bending type absorbs a column pressing load by plastic deformation of an upper clamp, a ripping plate type absorbs a column pressing load by ripping a ripping plate, and a ball type absorbs a column pressing load as disclosed in Japanese Patent Application Publication No. 2002-67980.

### SUMMARY OF THE INVENTION

It is an object of the present invention to provide an energy absorbing steering apparatus or steering column assembly capable of absorbing a column pressing load effectively in accordance with various conditions.

According to one aspect of the present invention, an energy absorbing steering apparatus including: first and second members one of which is an immovable member to be supported on a vehicle body, and the other of which is a movable member to move in a first direction relative to the immovable member when impact load is applied; a holding member mounted on the first member and formed with an elongate hole; a sliding shaft mounted on the second member and arranged to slide forcibly in the elongate hole to absorb impact energy when the movable member moves in the first direction relative to the immovable member, the sliding shaft including a portion having cross sections of different sizes; and an actuating mechanism to shift the position of the sliding shaft inserted in the elongate hole.

The other objects and features of this invention will become understood from the following description with reference to the accompanying drawings.

### BRIEF DESCRIPTION OF THE DRAWINGS

FIG. 1 is a perspective view showing an energy absorbing steering apparatus according to a first embodiment of the present invention.

FIG. 2 is differently angled perspective view showing the energy absorbing steering apparatus of FIG. 1.

FIG. 3 is a side view showing a steering mechanism including the energy absorbing steering apparatus of FIG. 1.

FIG. 4 is a bottom view showing the steering mechanism including the energy absorbing steering apparatus of FIG. 1.

FIG. 5 is a view of the steering mechanism of FIG. 3 as viewed in a direction indicated by arrow A.

FIG. 6 is a sectional view taken along a line VI-VI shown in FIG. 5.

FIG. 7 is a block diagram of a controlling section of the energy absorbing steering apparatus of FIG. 1.

FIG. 8 is a perspective view showing an energy absorbing steering apparatus according to a second embodiment of the present invention.

FIG. 9 is differently angled perspective view showing the energy absorbing steering apparatus of FIG. 8.

FIG. 10 is a side view showing a steering mechanism including the energy absorbing steering apparatus of FIG. 8.

FIG. 11 is a bottom view showing the steering mechanism including the energy absorbing steering apparatus of FIG. 8.

FIG. 12 is a view of the steering mechanism of FIG. 10 as viewed in a direction indicated by arrow C.

FIG. 13 is a sectional view taken along a line XIII-XIII shown in FIG. 12.

FIG. 14 is a block diagram of a controlling section of the energy absorbing steering apparatus of FIG. 8.

FIG. 15 is a side view showing an energy absorbing steering apparatus according to a third embodiment of the present invention.

FIG. 16 is a plan view showing the steering mechanism including the energy absorbing steering apparatus of FIG. 15.

FIG. 17 is an exploded perspective view showing a front part of the energy absorbing steering apparatus of FIG. 15.

FIG. 18 is a sectional view showing a holding part and a holding member of the energy absorbing steering apparatus of FIG. 15.

FIG. 19 is a sectional view showing a second holding part and the holding member of the energy absorbing steering apparatus of FIG. 15.

### DETAILED DESCRIPTION OF THE INVENTION

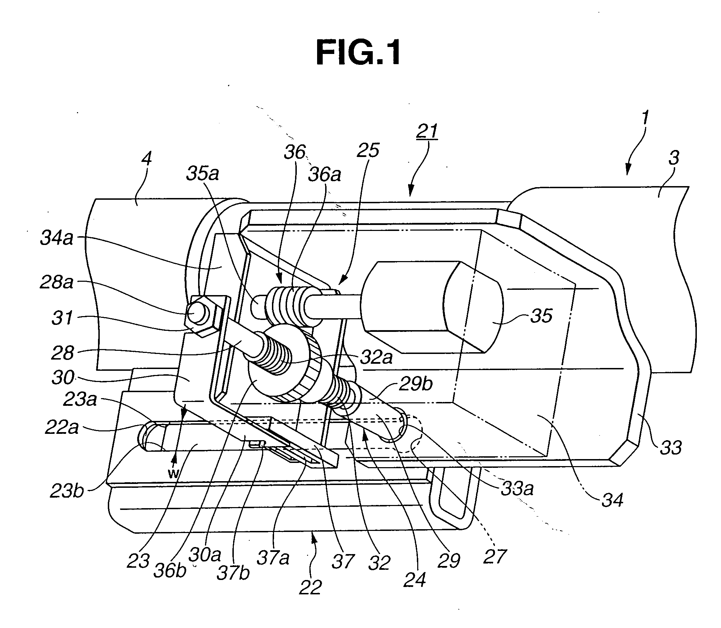

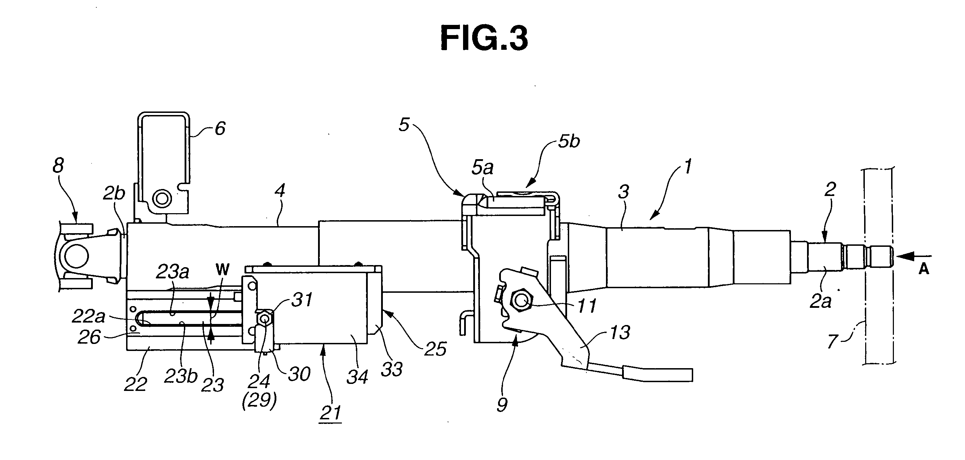

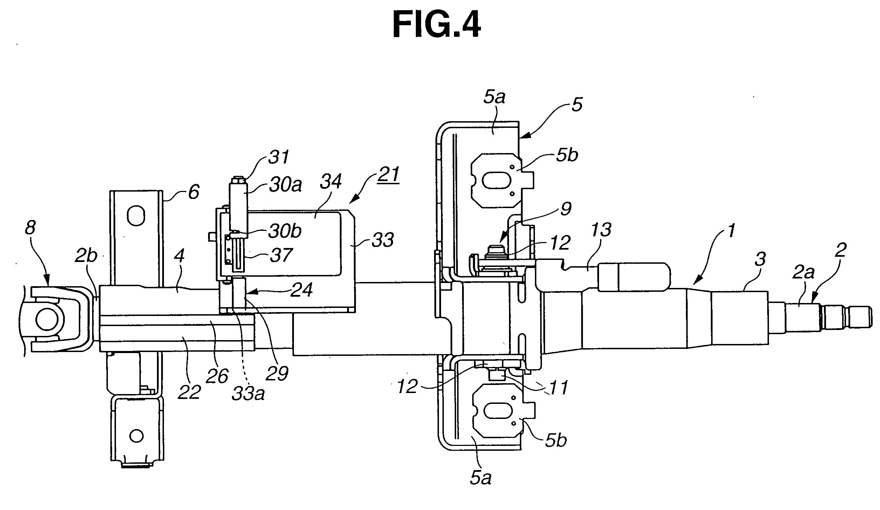

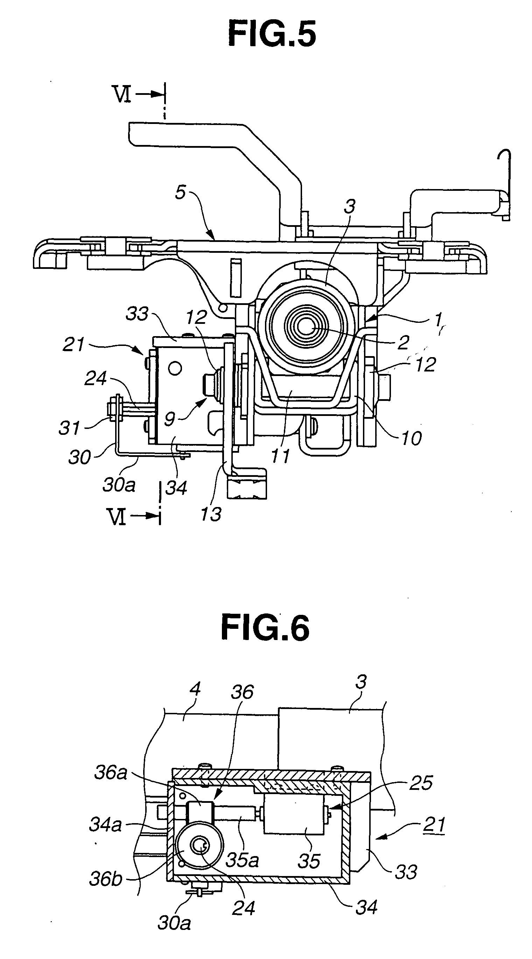

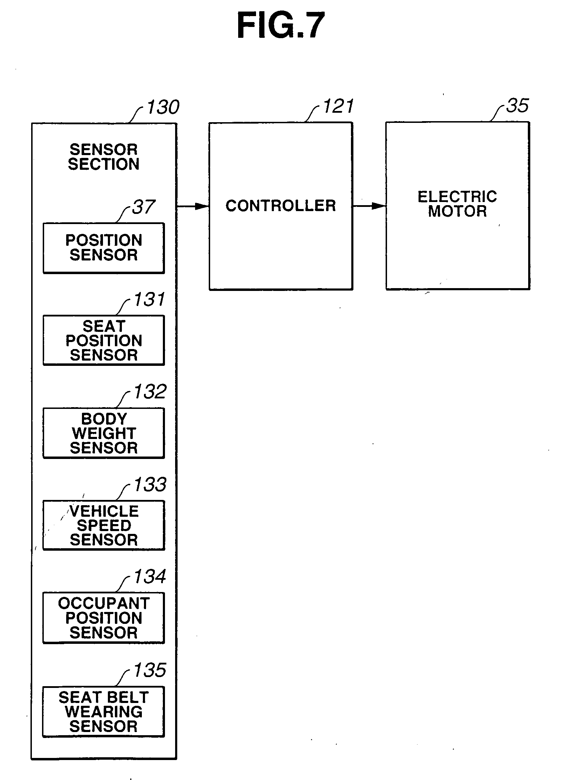

FIG. 1 to FIG. 6 show an energy absorbing steering column assembly or energy absorbing steering apparatus according to a first embodiment of the present invention. FIG. 7 is a block diagram of a controlling section of the energy absorbing steering apparatus of FIG. 1 to FIG. 6. A steering shaft 2 is supported through bearings in a steering column 1. The steering column 1, in an assembled state in a vehicle body, extends in a longitudinal direction of the steering column from a rear upper position to a front lower position. The longitudinal direction of the steering column 1 in this example is coincident with a longitudinal direction of the vehicle body in a plan view. As shown in FIGS. 3 and 4, the steering column 1 of this example includes steel upper and lower tubes 3 and 4. A rear end of the of the lower tube 4 is inserted into a front end of the upper tube 3. The steering column 1 is mounted on a vehicle body member of the vehicle body, by an upper mounting bracket 5 holding the front end of the upper tube 3 and a lower mounting bracket 6 holding a front end of the lower tube 4.

When a predetermined forward column pressing load is applied from a steering wheel 7 via the steering shaft 2, the upper tube 3 is moved forward together with the upper bracket 5, whereas the lower tube 4 is held immovable fixed by the lower bracket 6 fixed to the member of the vehicle body. In this example, the upper tube 3 is a movable member separably supported on the vehicle body so as to be separated from the vehicle body, and the lower tube 4 is an immovable member immovably supported on the vehicle body.

The steering shaft 2 is composed of an upper shaft 2a and a lower shaft 2b. The upper shaft 2a extends from an upper end on which the steering wheel 7 is mounted, to a lower end. The lower shaft 2b extends from an upper end coupled with the lower end of the upper shaft 2a, to a lower end coupled with a universal joint 8. The upper end of the lower shaft 2b is coupled axially movably with the lower end of the upper shaft 2a. Torque of the steering wheel 7 is capable of being transmitted from the upper shaft 2a to the lower shaft 2b. The torque of the steering wheel 7 is transmitted from the upper shaft 2a and the lower shaft 2b further via an intermediate shaft to a steering gear. A rack-and-pinion mechanism in the steering gear moves tie rods, and thereby varies a steer angle of front wheels to steer the vehicle.

As shown in FIG. 4, the upper bracket 5 comprises left and right support plates 5a extending laterally, respectively, on the left and right sides of the steering column 1. Left and right breakaway capsules 5b are arranged to support rear ends of the left and right support plates 5a, respectively. The breakaway capsules 5b are fixed by bolts to the vehicle body member. The breakaway capsules 5b support the upper bracket 5 and the upper tube 3 separably from the vehicle body. When a forward column pressing load of a magnitude larger than or equal to a predetermined level acts on the upper tube 3, the breakaway capsules 5b allow the upper tube 3 to slide forward together with the upper bracket 5. Besides, as shown in FIG. 3, a tilt mechanism 9 is provided at a lower end of the upper bracket 5. The tilt mechanism 9 allows the steering column 1 together with the steering wheel 7 mounted thereon to be adjusted in position between predetermined upper and lower levels.

As shown in FIGS. 3, 4 and 5, the tilt mechanism 9 is composed of tilt holes formed at both lower sides of a distance bracket 10 fixed to the steering column 1, a tilt bolt 11 and a tilt lever 13. The tilt bolt 11 is inserted into the above-mentioned tilt holes, and long tilt holes formed in both lower side walls of the upper bracket 5. The tilt lever 13 is mounted on one end of the tilt bolt 11 by using a nut 12, for example.

At a position nearer to the front lower position from the tilt mechanism 9, an energy absorbing mechanism 21 absorbing a column pressing load caused by a secondary collision following a primary collision of the vehicle is provided on the upper tube 3 adjacently to the lower tube 4. The energy absorbing mechanism 21 absorbs a column pressing load caused by a secondary collision of the driver to the steering wheel 7 which follows a primary collision of the vehicle to another object.

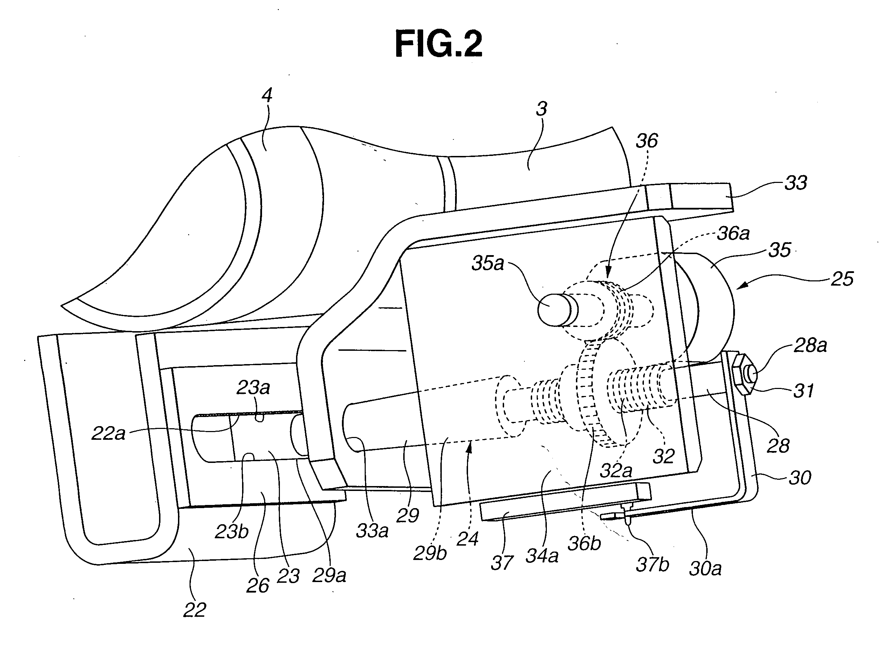

As shown in FIGS. 1 and 2, the energy absorbing mechanism 21 is composed of a holding member 22 fixed at a lower side of the front end of the lower tube 4, a sliding shaft 24 and a control or actuating mechanism 25. The holding member 22 is formed with an elongate hole 23 at a widthwise center position. The elongate hole 23 is elongated in the longitudinal direction of the lower tube 4 of the steering column 1. The sliding shaft 24 extends, through the elongate hole 23, in a transverse direction, which is substantially parallel to the widthwise direction of the vehicle in the assembled state in the vehicle. The control mechanism 25 varies an amount of insertion of the sliding shaft 24 into the elongate hole 23.

As shown in FIGS. 1 and 2, the holding member 22 includes a U-shaped member having a U-shaped cross section and extending in the longitudinal direction of the lower tube 4 along the axis of the lower tube 4. An upper side of the U-shaped member of the holding member 22 is welded to the lower side of the lower tube 4. The U-shaped member has first and second side walls. A longitudinally extending window 22a is formed in the first side wall of the U-shaped member of the holding member 22. An elongate hole forming plate member 26 in the form of a long rectangular plate is fixed by bolts to the first side wall of the U-shaped member. The elongate hole 23 is formed in the elongate hole forming plate member 26 alongside the window 22a.

The elongate hole 23 includes a first hole portion extending from a first (front) end to a second (rear) end and a second hole portion 27 continuous with the second (rear) end of the first hole portion. The first hole portion is formed between two parallel opposite edges 23a and 23b extending in the longitudinal direction of the lower tube 4. The width W of the first hole portion between the two opposite edges 23a and 23b is uniform along the longitudinal direction from the first end to the second end of the first hole portion. The second hole portion 27 of this example is a circular standby hole having a relatively large diameter, for normally receiving the sliding shaft 24.

As shown in FIGS. 1 and 2, the sliding shaft 24 extends, through the elongate hole 23, from an outer shaft end 28a located outside the holding member 22, to an inner shaft end located inside the holding member 22. The sliding shaft 24 of this example is composed of a main shaft portion 28 defining the outer shaft end 28a, and an inner end portion (or insertion portion) 29 fixed to the main shaft portion, and inserted in the elongate hole 23. An upper end of an upright arm of a movable L-shaped bracket 30 is fixed to first end 28a of the main shaft portion 28 by a nut 31. A tubular portion 32 is fixedly mounted on a middle portion of the main shaft portion 28. The tubular portion 32 has an external ball screw thread 32a for a ball screw. The sliding shaft 24 as a whole including the movable bracket 30 is axially movable by the control mechanism 25.

The movable bracket 30 includes a lower arm having a lower end portion 30a extending just below a rectangular position sensor 37. The position sensor 37 is fixed to a bottom of a housing 34 of the control mechanism 25. The lower end portion 30a is engaged with a sensor pin 37b sliding in a groove 37a formed in an elongate sensor body of the position sensor 37. When the movable bracket 30 moves together with the sliding shaft 24 in the axial direction of the sliding shaft 24, the sensor pin 37b slides inside the groove 37a, and therefore, the position sensor can sense an axial position of the sliding shaft 24, i.e., the amount (a position) of insertion of the insertion portion 29 into the standby hole 27.

The insertion portion 29 is tapered from an outer end 29b to an inner end 29a so that the cross sectional size of the insertion portion 29 becomes smaller gradually from the outer end 29b to the inner end 29a of the insertion portion 29. In this example, the insertion portion 29 has a conical outside surface like a right circular cone, and the outside diameter of the insertion portion becomes smaller gradually from the outer end 29b to the inner end 29a. The insertion portion 29 is smaller in sectional size than the standby hole 27, so that the insertion portion 29 can be inserted into the standby hole 27. The diameter of the insertion portion 29 is greater than the width W of the first hole portion of the elongate hole 23. The insertion portion 29 is supported axially movably by a support hole 33a formed in a support bracket 33, and is inserted into the standby hole 27.

The control or actuating mechanism 25 comprises the housing 34, an electric motor 35 provided in the housing 34, and a gear mechanism 36. The electric motor 35 is controlled by a controlling section 120 including, as a main component, a controller 121 in accordance with at least an information signal representing the axial position of the sliding shaft 24 inserted in the elongate hole 23. The housing 34 is provided in the substantially L-shaped support bracket 33 welded to the upper tube 3. The gear mechanism 36, which is a shaft shifting member, is arranged to move the sliding shaft 24 in the axial direction back and forth in the elongate hole 23 with a torque generated by the electric motor 35, which is a shaft shifting member actuator.

The electric motor 35 of this example is a DC pulse motor having a drive shaft which includes a cylindrical shaft end portion 35a rotatably supported in a shaft hole formed in a front end wall 34a of the housing 34.

The gear mechanism 36 of this example includes a worm 36a fixedly mounted on the shaft end portion 35a of the drive shaft of the electric motor 35, and a worm wheel 36b having external teeth meshing with the worm 36a. The worm wheel 36b further includes an internal ball screw groove formed in an inside surface of a central hole. The internal ball screw groove of the worm wheel 36b is engaged with the external ball screw thread 32a of the main shaft portion 28 of the sliding shaft 24.

As shown in FIG. 7, the controller 121 is connected with a sensor section 130 for collecting information required for controlling the amount of insertion of the sliding shaft 24 into the elongate hole 23. In this example, the sensor section 130 includes at least one of the position sensor 37, a seat position sensor 131, a body weight sensor 132 sensing a body weight of a driver, a vehicle speed sensor 133, an occupant position sensor 134, and a seat belt wearing sensor 135. In accordance with information supplied from the sensor section 130, the controller 121 controls the axial position of the sliding shaft 24 by controlling a control current to the electric motor 35.

In the first embodiment, for example, when the body weight of the driver is light, in accordance with information representing this light body weight which is supplied from the body weight sensor 132, and the information signal representing the axial position of the sliding shaft 24 which is supplied from the position sensor 37, the controller 121 rotates the worm 36a unidirectionally in the transverse direction by controlling the control current to the electric motor 35. The unidirectional transverse rotation of the worm 36a rotates the worm wheel 36b unidirectionally in the longitudinal direction. Along with the rotation of the internal ball screw groove of the worm wheel 36b, the external ball screw thread 32a of the main shaft portion 28 also rotates in the longitudinal direction of the steering column 1 so as to move in the axial direction of the sliding shaft 24, thereby moving the insertion portion 29 toward outside to a predetermined position. Thus, a portion of the inner end 29a having a relatively small diameter corresponding to this position is inserted into the standby hole 27 via the support hole 33a in a standby state.

In this state, by being applied with a forward column pressing load of a magnitude larger than or equal to the predetermined level caused when a secondary collision of the driver to the steering wheel 7 occurs following a primary collision of the vehicle to another object, the upper bracket 5 separates from the breakaway capsules 5b so that the upper tube 3 and the upper shaft 2a move forward in the longitudinal direction. Thus, the support bracket 33 welded to the upper tube 3 also moves forward in the longitudinal direction, and accordingly, the sliding shaft 24 supported by the support hole 33a formed in the support bracket 33, and the control mechanism 25 connected with the sliding shaft 24 via the gear mechanism 36, also move forward in the longitudinal direction. In this course, the edge of the support hole 33a provides the insertion portion 29 of the sliding shaft 24 with a force to move forward in the longitudinal direction, and the above-mentioned portion of the inner end 29a having the relatively small diameter forcibly engages into the elongate hole 23 in the longitudinal direction sideways from the standby hole 27, and subjects the opposite edges 23a and 23b to a frictional resistance therewith so that the opposite edges 23a and 23b undergo a plastic deformation.

In this case, the frictional resistance and the plastic deformation of the opposite edges 23a and 23b become relatively small in accordance with the relatively small diameter of the above-mentioned portion of the inner end 29a, and thereby effectively absorb the relatively small column pressing load corresponding to the light weight of the driver.

On the other hand, for example, when the body weight of the driver is heavy, in accordance with information representing this heavy body weight which is supplied from the body weight sensor 132, and the information signal representing the axial position of the sliding shaft 24 which is supplied from the position sensor 37, the controller 121 rotates the worm 36a reversely in the above-mentioned transverse direction by controlling the control current to the electric motor 35. The reverse transverse rotation of the worm 36a rotates the worm wheel 36b reversely in the above-mentioned longitudinal direction. Along with the rotation of the internal ball screw groove of the worm wheel 36b, the external ball screw thread 32a of the main shaft portion 28 also rotates reversely in the above-mentioned longitudinal direction, and thereby moving the insertion portion 29 of the sliding shaft 24 toward inside to a predetermined position. Thus, a portion of the outer end 29b having a relatively large diameter corresponding to this position is inserted into the standby hole 27 via the support hole 33a in a standby state.

In this state, by being applied with a forward column pressing load of a magnitude larger than or equal to the predetermined level caused when the secondary collision of the driver to the steering wheel 7 occurs, the upper tube 3 moves forward in the longitudinal direction. Thus, the support bracket 33 welded to the upper tube 3 also moves forward in the longitudinal direction, and consequently as described above, the edge of the support hole 33a provides the insertion portion 29 of the sliding shaft 24 with a force to move forward in the longitudinal direction, and the above-mentioned portion of the outer end 29b having the relatively large diameter forcibly engages into the elongate hole 23 in the longitudinal direction sideways from the standby hole 27, and subjects the opposite edges 23a and 23b to a frictional resistance therewith so that the opposite edges 23a and 23b undergo a relatively large plastic deformation.

In this case, the frictional resistance and the plastic deformation of the opposite edges 23a and 23b become relatively in accordance with the relatively large diameter of the above-mentioned portion of the outer end 29b, and thereby effectively absorb the relatively large column pressing load corresponding to the heavy weight of the driver.

Without the above-described structure, in order to absorb a column pressing load variably in accordance with various conditions, such as the body weight of the driver, for example, an energy absorbing steering apparatus must include a large number of components, such as a plurality of metal balls, a plurality of holders holding the metal balls, and separators separating the holders, which results in an increase in size of the apparatus; and further, each of the components is required to be formed with high precision. Accordingly, such energy absorbing steering apparatus could not be manufactured or assembled with high efficiency at low costs.

As described above, however, according to the first embodiment, the amount of insertion of the insertion portion 29 into the elongate hole 23 can be varied continuously in accordance with such conditions as the body weight of the driver, for example, so as to continuously vary the frictional resistance and the plastic deformation of the opposite edges 23a and 23b of the elongate hole 23, and thereby absorb the above-mentioned column pressing load effectively and precisely.

Additionally, the above-described structure according to the present embodiment does not require each component to be formed with high precision. Further, the above-mentioned continuously variable absorption of the column pressing load does not cause an increase in the number of components or in size of the apparatus, while providing the driver with an improved safety by absorbing the column pressing load effectively and precisely.

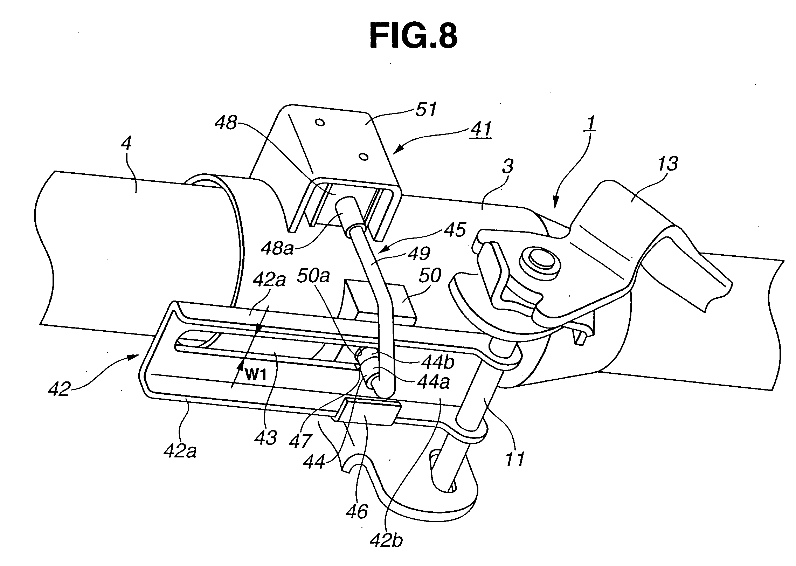

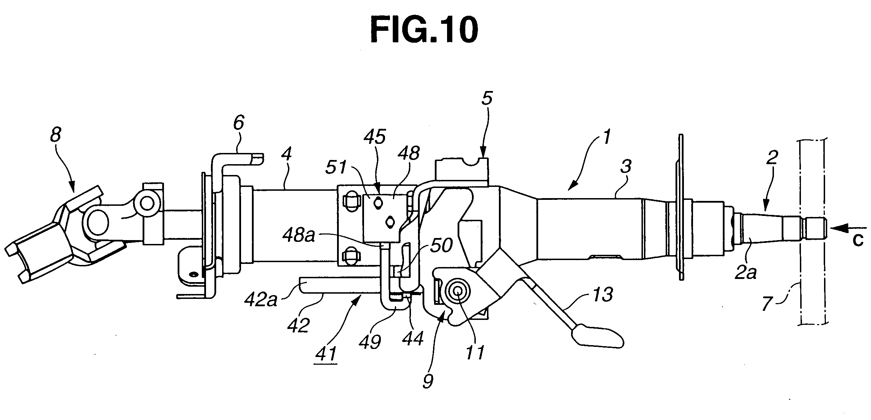

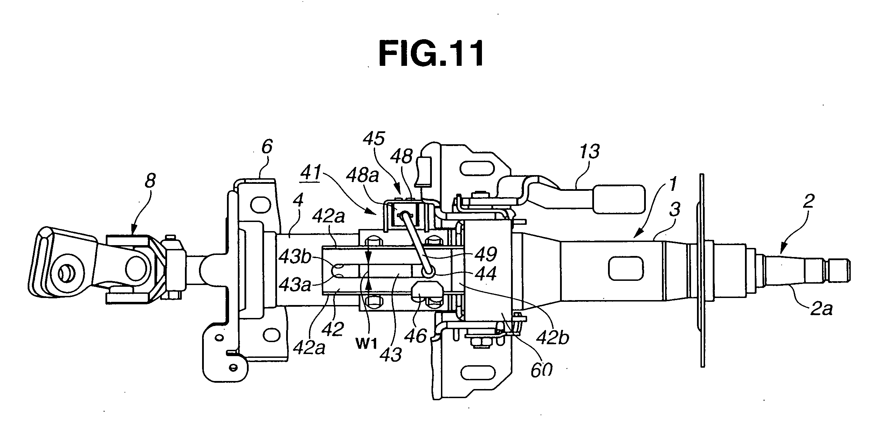

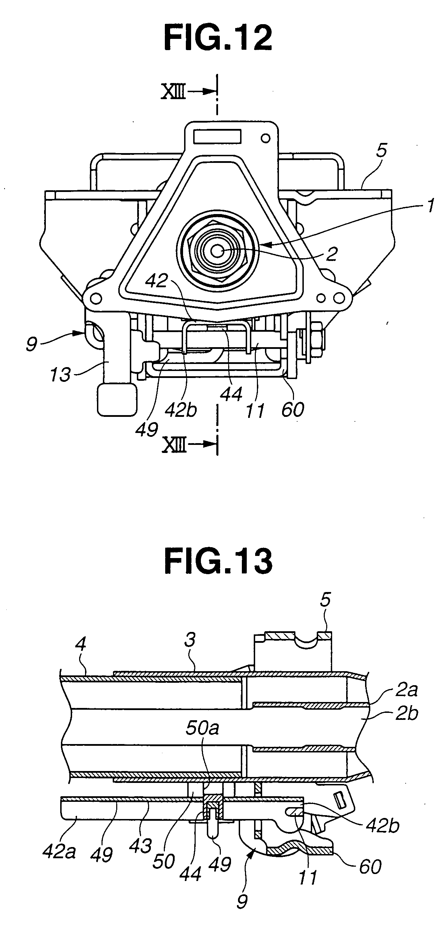

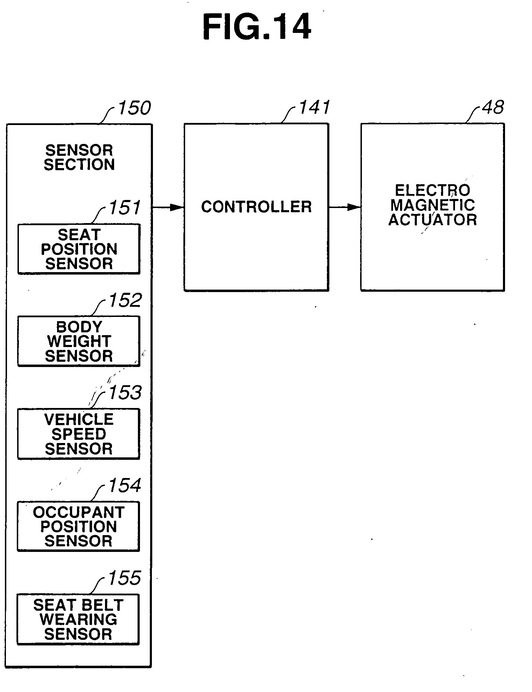

FIG. 8 to FIG. 13 show an energy absorbing steering column assembly or energy absorbing steering apparatus according to a second embodiment of the present invention. FIG. 14 is a block diagram of a controlling section of the energy absorbing steering apparatus of FIG. 8 to FIG. 13. In the second embodiment, an energy absorbing mechanism 41 is substituted for the energy absorbing mechanism 21. The upper bracket 5 is held immovable to the vehicle body member. In this example, at least one of the upper bracket 5 and the tilt bolt 11 serves as an immovable member immovably provided on the vehicle body. A distance bracket 60 fixed to the upper tube 3 is a movable member fixedly mounted on the steering column 1 so as to be separated from the vehicle body. As shown in FIG. 13, tilt holes formed at both lower sides of the distance bracket 60 open toward the rear end in the longitudinal direction of the steering column 1. When the secondary collision of the driver to the steering wheel 7 occurs, the distance bracket 60 separates from the tilt bolt 11 so that the distance bracket 60 moves forward together with the upper tube 3 in the longitudinal direction.

The energy absorbing mechanism 41 is composed of a holding member 42 extending below the upper bracket 5 in the longitudinal direction of the upper and lower tubes 3 and 4 along the axis thereof, a sliding shaft 44 and a control or actuating mechanism 45. The holding member 42 is formed with an elongate hole 43 at a widthwise center position. The elongate hole 43 is elongated in the longitudinal direction of the lower tube 4 of the steering column 1. The sliding shaft 44 extends, through the elongate hole 43, from downward in a perpendicular direction, which is substantially parallel to the height direction of the vehicle in an assembled state in the vehicle. The control mechanism 45 varies an amount of insertion of the sliding shaft 44 into the elongate hole 43.

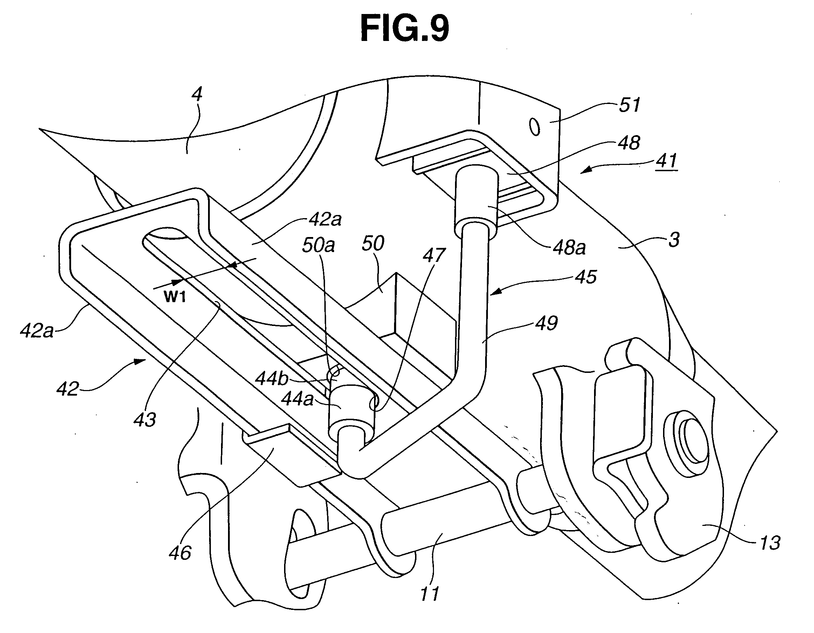

As shown in FIGS. 8 and 9, the holding member 42 includes an inverted U-shaped metal member having a short inverted U-shaped cross section and extending in the longitudinal direction of the lower tube 4 along the axis of the lower tube 4. The inverted U-shaped member has first and second short side portions 42a so as to have an increased rigidity. A rear end portion 42b of the inverted U-shaped member of the holding member 42 is fixed to the tilt bolt 11 inserted into tilt holes formed at both lower sides of a distance bracket 60 (as shown in FIG. 12) of the tilt mechanism 9. A substantially L-shaped support piece 46 fixed to a lower part of the upper tube 3 contacts and supports a lower end surface of the first side portion 42a at a longitudinally central position.

The elongate hole 43 includes a first hole portion extending from a first (front) end to a second (rear) end and a second hole portion 47 continuous with the second (rear) end of the first hole portion. The first hole portion is formed between two parallel opposite edges 43a and 43b extending in the longitudinal direction of the lower tube 4. The width W1 of the first hole portion between the two opposite edges 43a and 43b is uniform along the longitudinal direction from the first end to the second end of the first hole portion. The second hole portion 47 of this example is a circular standby hole, for normally receiving the sliding shaft 44.

As shown in FIGS. 8 and 9, the sliding shaft 44 of this example is composed of a base shaft portion 44a, and an upper shaft portion 44b fixed to the base shaft portion 44a. The sliding shaft 44 extends upward, through the elongate hole 43, in the perpendicular direction from the base shaft portion 44a to the upper shaft portion 44b. The base shaft portion 44a has a relatively large diameter, and the upper shaft portion 44b has a smaller diameter than the base shaft portion 44a, thereby providing the sliding shaft 44 with a stepped outer surface. The upper shaft portion 44b of the sliding shaft 44 is inserted through the standby hole 47 into a support hole 50a formed in a support member 50 welded to a lower surface of the front end of the upper tube 3.

The control or actuating mechanism 45 includes an electromagnetic actuator 48 provided on one side of the upper tube 3, and an actuation rod 49. The electromagnetic actuator 48 is controlled by a controlling section 140 including, as a main component, a controller 141 in accordance with at least an information signal representing the axial position of the sliding shaft 44 inserted in the standby hole 47. The actuation rod 49, which is a shaft shifting member, is arranged to move the sliding shaft 44 in the axial direction back and forth in the standby hole 47 when the electromagnetic actuator 48, which is a shaft shifting member actuator, is operated.

The electromagnetic actuator 48 of this example is fixedly mounted on a substantially U-shaped cover 51 which is fixedly mounted on the upper tube 3. The electromagnetic actuator 48 includes a solenoid casing containing general solenoid components, such as an electromagnetic coil and a stationary core, and a movable core 48a which moves upward by being attracted by the stationary core when the electromagnetic coil is excited.

The actuation rod 49 is includes a substantially U-shaped member. The U-shaped member includes a base shaft portion coupled with a bottom of the movable core 48a by bolts, and a lower shaft portion coupled axially with a bottom of the base shaft portion 44a of the sliding shaft 44. When the electromagnetic coil is excited, the movable core 48a moves upward, and thereby pulls the actuation rod 49 upward in the perpendicular direction, which inserts the base shaft portion 44a into the standby hole 47. When the electromagnetic coil is demagnetized, the movable core 48a moves downward, and thereby moves the actuation rod 49 downward in the perpendicular direction, which inserts the upper shaft portion 44b into the standby hole 47.

As shown in FIG. 14, the controller 141 is connected with a sensor section 150 for collecting information required for controlling the amount of insertion of the sliding shaft 44 into the elongate hole 43. In this example, the sensor section 150 includes at least one of a seat position sensor 151, a body weight sensor 152 sensing a body weight of a driver, a vehicle speed sensor 153, an occupant position sensor 154, and a seat belt wearing sensor 155. In accordance with information supplied from the sensor section 150, the controller 141 controls the axial position of the sliding shaft 44 by controlling a control current to the electromagnetic actuator 48.

In the second embodiment, for example, when the body weight of the driver is light, in accordance with information representing this light body weight which is supplied from the body weight sensor 152, the controller 141 controls the control current to the electromagnetic actuator 48 so that the electromagnetic actuator 48 does not operate. Therefore, the movable core 48a and the actuation rod 49 are positioned downward so that the upper shaft portion 44b of the sliding shaft 44 is inserted in the standby hole 47 and the support hole 50a in a standby state, as shown in FIGS. 8 and 9.

In this state, when the secondary collision of the driver to the steering wheel 7 occurs, the distance bracket 60 separates from the tilt bolt 11 so that the upper tube 3 and the upper shaft 2a move forward in the longitudinal direction by being applied with a forward column pressing load of a magnitude larger than or equal to the predetermined level. Thus, the electromagnetic actuator 48 fixed to the upper tube 3 also moves forward in the longitudinal direction, and accordingly, the sliding shaft 44 coupled with the actuation rod 49 which is coupled with the movable core 48a of the electromagnetic actuator 48 also moves forward in the longitudinal direction. In this course, the edge of the support hole 50a provides the upper shaft portion 44b of the sliding shaft 44 with a force to move forward in the longitudinal direction, and the upper shaft portion 44b of the sliding shaft 44 forcibly pushes into the elongate hole 43 in the longitudinal direction sideways from the standby hole 47, and subjects the opposite edges 43a and 43b to a frictional resistance with the outer surface of the upper shaft portion 44b so that the opposite edges 43a and 43b undergo an outward plastic deformation.

In this case, the frictional resistance and the plastic deformation of the opposite edges 43a and 43b become relatively small in accordance with the smaller diameter of the upper shaft portion 44b, and thereby effectively absorb the relatively small column pressing load corresponding to the light weight of the driver.

On the other hand, for example, when the body weight of the driver is heavy, for example, in accordance with information representing this heavy body weight which is supplied from the body weight sensor 152, the controller 141 controls the control current to the electromagnetic coil of the electromagnetic actuator 48 so that the movable core 48a moves upward, and thereby pulls the actuation rod 49 upward in the perpendicular direction, which inserts the upper shaft portion 44b of the sliding shaft 44 further into the support hole 50a via the standby hole 47, and the base shaft portion 44a is inserted in the standby hole 47 in a standby state.

In this state, when the secondary collision of the driver to the steering wheel 7 occurs, the upper tube 3 moves forward in the longitudinal direction by being applied with a forward column pressing load of a magnitude larger than or equal to the predetermined level, as described above. Thus, together with the forward movement of the electromagnetic actuator 48 fixed to the upper tube 3, the sliding shaft 44 coupled with the actuation rod 49 which is coupled with the movable core 48a also moves forward in the longitudinal direction. In this course, the edge of the support hole 50a provides the base shaft portion 44a of the sliding shaft 44 with a force to move forward in the longitudinal direction, and the base shaft portion 44a of the sliding shaft 44 forcibly pushes into the elongate hole 43 in the longitudinal direction sideways from the standby hole 47, and subjects the opposite edges 43a and 43b to a frictional resistance with the outer surface of the base shaft portion 44a so that the opposite edges 43a and 43b undergo a relatively large outward plastic deformation.

In this case, the frictional resistance and the plastic deformation of the opposite edges 43a and 43b become relatively large in accordance with the larger diameter of the base shaft portion 44a, and thereby effectively absorb the relatively large column pressing load corresponding to the heavy weight of the driver.

As described above, according to the second embodiment, the position of the sliding shaft 44 inserted in the elongate hole 43 can be varied by two steps in accordance with such conditions as the body weight of the driver, for example, so as to vary the frictional resistance and the plastic deformation of the opposite edges 43a and 43b of the elongate hole 43 by two steps, and thereby absorb the above-mentioned column pressing load effectively and precisely. Additionally, moving the sliding shaft 44 back and forth in the axial direction thereof only by a distance corresponding to the thickness of the holding member 42 enables change of the portions of the sliding shaft 44 inserted in the standby hole 47. Thus, since the sliding shaft 44 is moved only by the short distance without undergoing resistance, the electromagnetic actuator 48 including solenoid components producing moderate power is preferred to be used to move the sliding shaft 44.

Additionally, variations such as forming the outer surface of the sliding shaft 44 with three or more stepped shaft portions, or providing more than one electromagnetic actuator 48, enable the absorption of the column pressing load to be performed more precisely in accordance with various conditions, such as the body weight of the driver. Further, the above-described structure according to the present embodiment does not require each component to be formed with high precision.

Besides, in the second embodiment, the actuation rod 49 of the electromagnetic actuator 48 is pulled upward as described above; however, the electromagnetic actuator 48 may be provided with different structures or may be located at different positions so that the actuation rod 49 is pushed upward so as to insert the sliding shaft 44 into the elongate hole 43.

Further, the electromagnetic actuator 48 may include a self-maintaining solenoid member composed of a solenoid and a permanent magnet. In this self-maintaining solenoid member, a plunger is attracted to a coil of the solenoid by a quick energization of the coil, and thereafter is kept attracted by the permanent magnet without requiring the energization of the coil. Compared with a normal solenoid not using such a permanent magnet, this self-maintaining solenoid member has an improved durability.

Besides, the above-described two-step variable absorption of the column pressing load does not cause an increase in the number of components or in size of the apparatus, while providing the driver with an improved safety by absorbing the column pressing load effectively, as in the foregoing first embodiment.

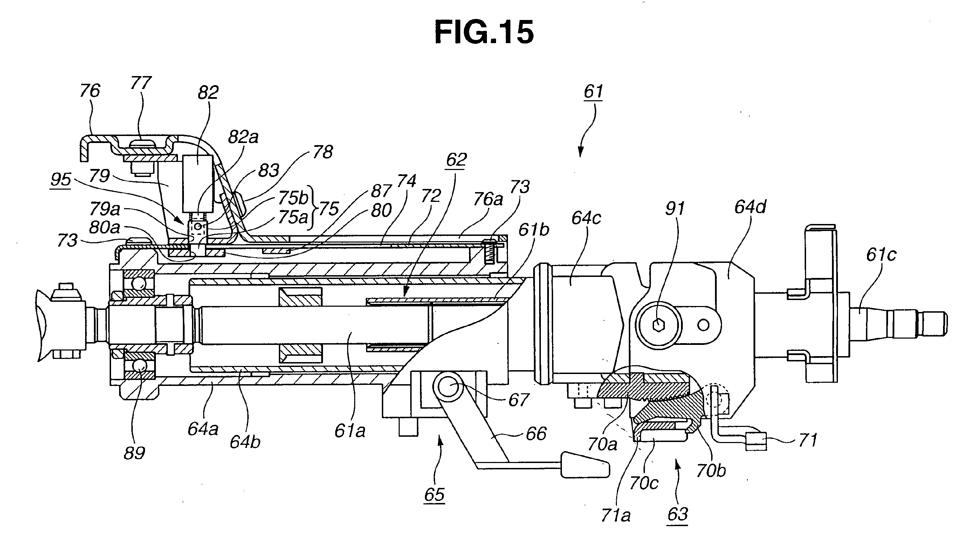

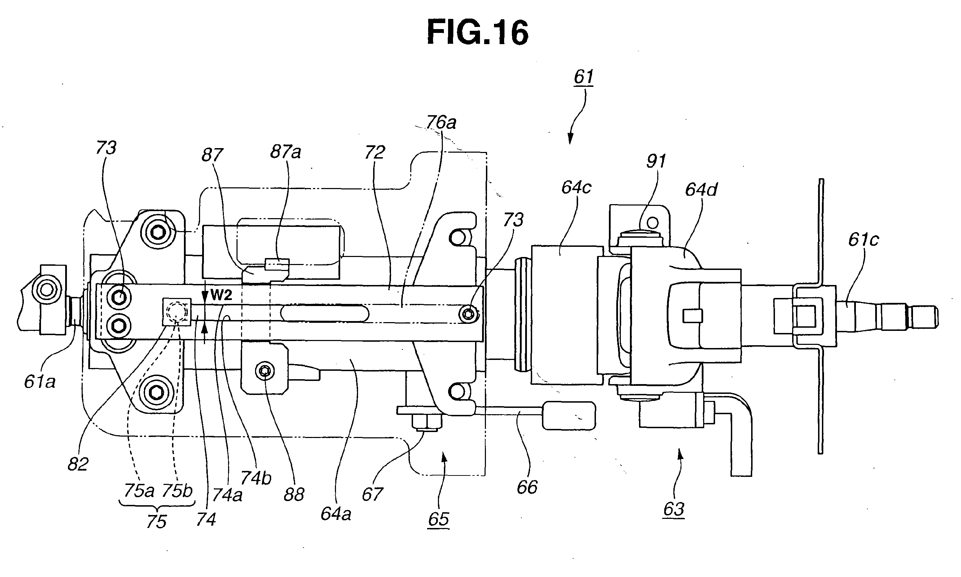

FIG. 15 to FIG. 19 show an energy absorbing steering column assembly or energy absorbing steering apparatus according to a third embodiment of the present invention. The energy absorbing steering apparatus according to the third embodiment is capable of performing a more stable absorption of the column pressing load caused when the secondary collision of the driver to the steering wheel occurs.

FIG. 15 shows a steering column 61 of the energy absorbing steering apparatus. The steering column 61 is composed of a shaft part, and a housing part covering the shaft part. In the shaft part, a solid lower shaft 61a is connected to the steering gear via the intermediate shaft. The solid lower shaft 61a and a hollow upper shaft 61b are coupled telescopically by a spline coupling part 62. The upper shaft 61b is coupled with a shaft 61c by a universal joint. The shaft 61c is connected to the steering wheel. In the housing part, an upper housing 64b is inserted into a lower housing 64a. The upper housing 64b is slidable in the lower housing 64a. The upper housing 64b is fixable to the lower housing 64a by a telescopic lock mechanism 65. A fixed housing 64c covers a rear end of the upper housing 64b. A movable housing 64d is rotatable on a rotary shaft 91 in a plane parallel to a longitudinal direction of the fixed housing 64c. The movable housing 64d is fixable to the fixed housing 64c by a tilt lock mechanism 63. The lower shaft 61a is supported on an axle bearing 89 provided on the lower housing 64a. The shaft 61c is supported on an axle bearing provided in the movable housing 64d.

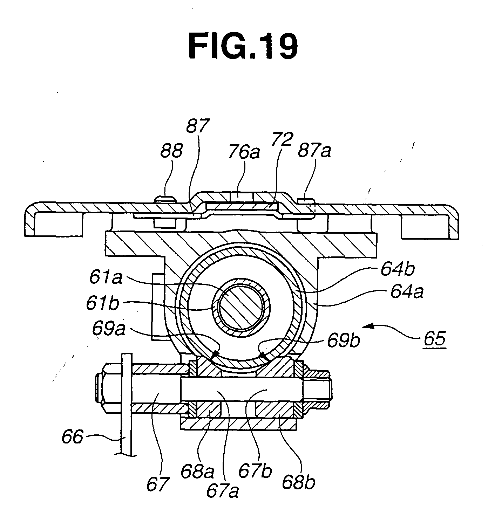

In the telescopic lock mechanism 65, as shown in FIG. 19, a telescopic lever 66 is coupled with a bolt 67. The bolt 67 is formed with a right screw portion 67a and a left screw portion 67b. The right screw portion 67a is screwed into a right nut block 68a, and the left screw portion 67b is screwed into a left nut block 68b. The nut blocks 68a and 68b are formed with tapering surfaces 69a and 69b, respectively. When the telescopic lever 66 is rotated in one direction around the axis of the bolt 67, the upper housing 64b is pressed against an inside surface of the lower housing 64a so that the upper housing 64b is telescopically locked with the lower housing 64a. When the telescopic lever 66 is rotated in the opposite direction around the axis of the bolt 67, the upper housing 64b is separated from the inside surface of the lower housing 64a so that the upper housing 64b is unlocked from the lower housing 64a.

In the tilt lock mechanism 63, as shown in FIG. 15, a fixed gear 70a is fixedly provided on the fixed housing 64c, and a movable gear 70b is rotatably provided on the movable housing 64d. A reaction force portion 70c is formed unitarily with the movable housing 64d. A wedge portion 71a is formed on a front end of a tilt lever 71. The tilt lever 71 is provided rotatably around an horizontal axis parallel to the axis of the movable housing 64d. When the tilt lever 71 is rotated in one direction around the horizontal axis, the wedge portion 71a is moved forward (leftward in FIG. 15), and is forced into a space between the reaction force portion 70c and the movable gear 70b so that the movable gear 70b is meshed with the fixed gear 70a by tilt-locking. When the tilt lever 71 is rotated in the opposite direction around the horizontal axis, the movable gear 70b is unlocked from the fixed gear 70a.

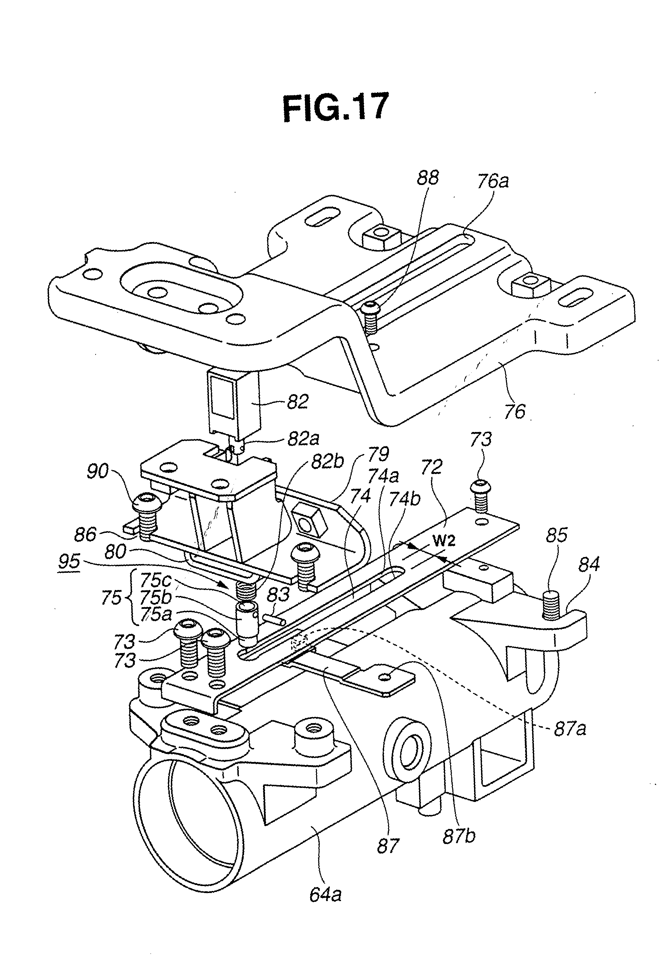

As shown in FIG. 17, a holding member 72 includes a substantially flat plate member bent downward at a front end. The flat plate member is mounted on an upper surface of the lower housing 64a of the steering column 61 by three bolts 73 screwed into holes formed at the front and rear ends of the flat plate member and the upper surface of the lower housing 64a. In detail, two of the three bolts 73 are screwed into the holes formed at the front end of the flat plate member and the upper surface of the lower housing 64a, and the remaining one of the three bolts 73 is screwed into the holes formed at the rear end of the flat plate member and the upper surface of the lower housing 64a. The holding member 72 is formed with an elongate hole 74. The elongate-hole 74 is elongated in a longitudinal direction of the lower housing 64a, which is, in this example, substantially parallel to the longitudinal direction of the vehicle body in an assembled state. The elongate hole 74 is forme0d between two substantially parallel opposite edges 74a and 74b extending in the longitudinal direction of the lower housing 64a with the width W2 therebetween. The flat plate member of the holding member 72 is mounted on the upper surface of the lower housing 64a with a gap therebetween except at the front and rear ends, as shown in FIG. 15. This gap enables the lower housing 64a to move relatively with respect to a holding plate 80 and a holding plate 87 by the holding member 72 sliding in the holding plate 80 and the holding plate 87, as hereinafter described. A sliding shaft 75, provided on the vehicle body in the assembled state, extends through the elongate hole 74 in a perpendicular direction, which is substantially parallel to the height direction of the vehicle in the assembled state.

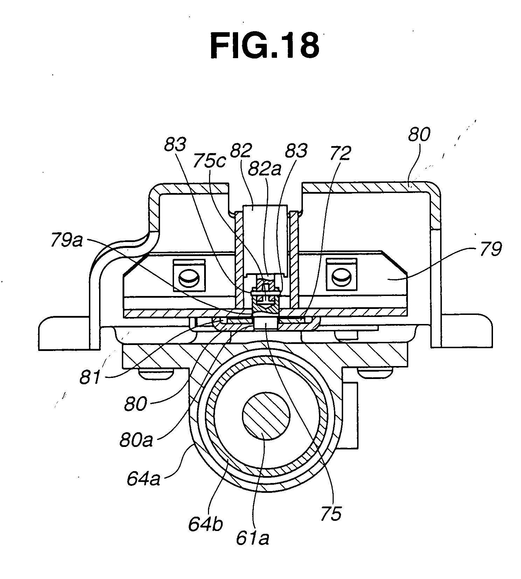

The holding plate 80, as a holding part provided on the vehicle body in the assembled state, slidably guides and holds the holding member 72, as shown in FIGS. 15, 17 and 18. A clamp 76, as a mounting bracket, is fixedly mounted on the vehicle body member by bolts. As shown in FIG. 15, a lower bracket 79 is coupled with an undersurface of the clamp 76 by bolts 77 and 78. The above-mentioned holding plate 80, as the holding part, is provided on an undersurface of the lower bracket 79 so as to slidably guide and hold the holding member 72. Left and right sides of the holding plate 80 are bent upward, and are welded to the undersurface of the lower bracket 79 so as to form a flat tubular portion 81 between the holding plate 80 and the lower bracket 79, as shown in FIG. 18. The holding member 72 is slidably guided and held in this tubular portion 81. Through holes 79a and 80a extending in the perpendicular direction are formed in the lower bracket 79 and the holding plate 80, respectively. The sliding shaft 75 extends through the through hole 79a, the elongate hole 74 and the through hole 80a in this order. The sliding shaft 75 extends through the elongate hole 74 in the perpendicular direction at a position corresponding to a position of the holding member 72 inserted in the longitudinal direction in the tubular portion 81. The sliding shaft 75 of this example has a two-stepped cylindrical body composed of a lower portion 75a and an upper portion 75b. The lower portion 75a has a diameter smaller than the upper portion 75b; in other words, the upper portion 75b has a diameter larger than the lower portion 75a. Inside sectional sizes of the through holes 79a and 80a are slightly larger than outside sectional sizes of the larger-diameter portion 75b and the smaller-diameter portion 75a, respectively. Therefore, by moving the sliding shaft 75 up and down in the perpendicular direction, either the larger-diameter portion 75b or the smaller-diameter portion 75a can be selectively positioned in the tubular portion 81.

As shown in FIG. 17, a mounting hole 75c is formed at a top surface of the sliding shaft 75. A movable core 82a of an electromagnetic actuator 82 of this example is fitted into the mounting hole 75c through a spring 82b interposed therebetween, and is retained in the mounting hole 75c by a pin 83. The electromagnetic actuator 82 is coupled with the lower bracket 79 by bolts. The electromagnetic actuator 82 is a control or actuating mechanism which varies a position of the sliding shaft 75 inserted in the elongate hole 74 in the perpendicular direction. An energy absorbing mechanism 95 according to the third embodiment is composed at least of the holding member 72, the sliding shaft 75 and the electromagnetic actuator 82 as the control or actuating mechanism.

The lower housing 64a is separably coupled with each of the clamp 76 and the lower bracket 79 in the state where the holding member 72 is inserted in the tubular portion 81. As shown in FIG. 17, the lower housing 64a is coupled separably with the clamp 76 by a bolt 85 inserted into a groove 84 formed in the lower housing 64a, and is coupled separably with the lower bracket 79 by a bolt 90 inserted into a groove 86 formed in the lower housing 64a. Since each of the grooves 84 and 86 opens in the longitudinal direction of the lower housing 64a, when the secondary collision of the driver to the steering wheel applies the column pressing load to the steering column 61, the lower housing 64a separates from the clamp 76 and the lower bracket 79, and thus the steering column 61 separates from the vehicle body. The clamp 76 is formed with an elongate hole 76a for avoiding conflict with a head of the bolt 73 screwed at the rear end of the holding member 72 and the lower housing 64a. The elongate hole 76a is elongated in the longitudinal direction of the lower housing 64a. When the steering column 61 separates from the vehicle body, and moves forward in the longitudinal direction, the bolt 73 moves in the elongate hole 76a so that the head of the bolt 73 does not contact the clamp 76.

The holding plate 87, as a second holding part provided at a position spatially separated from the holding plate 80, slidably guides and holds the holding member 72, as shown in FIGS. 15, 17 and 19. The holding plate 87 is formed with an substantially J-shaped engagement portion 87a at the left side, and with a screw hole 87b at the right side. The holding plate 87 is coupled with the clamp 76 with the holding member 72 therebetween by the engagement portion 87a engaged with the clamp 76, and a bolt 88 screwed into the screw hole 87b through a hole formed in the clamp 76. Alternatively, instead of the above-described structure, a headed bolt or pin may be provided on one of the upper surface of the lower housing 64a and the undersurface of the clamp 76, and a member formed with an elongate hole may be provided on the other, so that the headed bolt or pin extends through the elongate hole.

In the present embodiment, as described above, since the lower housing 64a of the steering column 61 is coupled separably with the clamp 76 and the lower bracket 79 by the bolts 85 and 90 inserted into the grooves 84 and 86 having an opening in the longitudinal direction of the lower housing 64a. Therefore, when the secondary collision of the driver to the steering wheel applies the column pressing load to the steering column 61, the steering column 61 separates from the clamp 76 and the lower bracket 79, and moves forward in the longitudinal direction. In this course, since the holding member 72 is mounted on the lower housing 64a of the steering column 61, the holding member 72 slides forward in the longitudinal direction in the tubular portion 81 of the holding plate 80. The forward movement of the holding member 72 subjects the outer surface of the sliding shaft 75 to a frictional resistance with the opposite edges 74a and 74b of the elongate hole 74 so that the opposite edges 74a and 74b undergo a plastic deformation, and thereby effectively absorb the column pressing load. In this course, although the steering column 61 separates from the clamp 76 and the lower bracket 79, the steering column 61 is not completely detached from the vehicle body, since the holding member 72 is inserted in the tubular portion 81 and always held therein. In addition, since the holding member 72 is also held in the holding plate 87 at all times, the steering column 61 is kept in a stable posture when separating from the clamp 76 and the lower bracket 79.

Besides, in the present embodiment, since the sliding shaft 75 extends through the through hole 79a, the elongate hole 74 and the through hole 80a in this order, the sliding shaft 75 is supported by the lower bracket 79 and the holding plate 80 at positions above and below the position at which the sliding shaft 75 passes through the elongate hole 74 of the holding member 72. Thus, the sliding shaft 75 is supported firmly at the positions above and below the position at which the sliding shaft 75 is subjected to the large frictional resistance with the opposite edges 74a and 74b of the elongate hole 74 of the holding member 72. Further, the sliding shaft 75 is kept stably at the position at which the sliding shaft 75 passes through the elongate hole 74 of the holding member 72 so that the opposite edges 74a and 74b can stably absorb the column pressing load.

Besides, in the present embodiment, the inside sectional sizes of the through holes 79a and 80a can be set in accordance with the outside sectional sizes of the larger-diameter portion 75b and the smaller-diameter portion 75a, respectively. Therefore, the inside sectional sizes of the through holes 79a and 80a may be set in accordance with the outside sectional sizes of the larger-diameter portion 75b and the smaller-diameter portion 75a, respectively, so that a gap between each of the through holes 79a and 80a and the sliding shaft 75 becomes small. This small gap prevents the sliding shaft 75 from being moved by the frictional resistance with the opposite edges 74a and 74b of the elongate hole 74 when the holding member 72 slides forward in the longitudinal direction upon the secondary collision of the driver to the steering wheel. This prevents the column pressing load from acting on the electromagnetic actuator 82 that is connected with the sliding shaft 75.

Further, in the present embodiment, since the holding member 72 is mounted on the upper surface of the lower housing 64a, the steering column 61 is capable of moving in a large distance, compared to a structure in which the holding member 72 is provided on the vehicle body. If the holding member 72 is provided on the clamp 76 mounted on the vehicle body, the clamp 76 is required to be formed large because the holding member 72 is formed with the elongate hole 74. However, in the present embodiment, since the holding member 72 is provided on the lower housing 64a, the clamp 76 can be formed small.

Other than the structures, functions and effects described above, the energy absorbing steering apparatus according to the third embodiment has substantially the same structures, functions and effects as described in the foregoing second embodiment.

In this example, since the elongate hole 74 is elongated in the longitudinal direction of the lower housing 64a of the steering column 61, the elongate hole 74 is elongated in the longitudinal direction of the vehicle body when the steering column 61 is assembled in the vehicle body so as to extend in the longitudinal direction of the vehicle body. Therefore, when the steering column 61 is assembled in the vehicle body so as to extend horizontally in the longitudinal direction of the vehicle body, the elongate hole 74 is also elongated horizontally in the longitudinal direction of the vehicle body. Similarly, when the steering column 61 is assembled in the vehicle body so as to extend in the longitudinal direction of the vehicle body from a front lower position to a rear upper position, the elongate hole 74 is also elongated in the longitudinal direction of the vehicle body from a front lower position to a rear upper position.

Further, the present invention is not limited to the above-described examples. The width W/W1/W2 of the elongate hole 23/43/74 or the diameters of the sliding shaft 24/44/75 may be varied in accordance with various conditions, such as a size or other specifications of the vehicle, so as to vary the magnitude of the frictional resistance and the plastic deformation of the opposite edges 23a-23b/43a-43b/74a-74b of the elongate hole 23/43/74, and thereby absorb the above-mentioned column pressing load optimally with high precision.

Besides, in the above-described third embodiment, the holding part 80 or the holding part 87 holds the holding member 72 across left and right sides including a middle portion by the flat tubular portion 81 or by a main portion between the engagement portion 87a and the screw hole 87b. However, the holding part 80 or the holding part 87 may have a different form, such as having a substantially C-shaped cross section, so as to support only the left and right side portions of the holding member 72 without supporting the middle portion. Specifically, the C-shaped part may be provided on the undersurface of the lower bracket 79 or the undersurface of the clamp 76 with an opening of the C-shaped part facing downward in the perpendicular direction. Alternatively, a pair of such C-shaped parts may be provided on left and right sides on the undersurface of the lower bracket 79 or the undersurface of the clamp 76 with openings of the C-shaped parts facing toward each other so as to support only the left and right side portions of the holding member 72 without supporting the middle portion of the holding member 72.

Besides, in the above-described second and third embodiments, each of the sliding shafts 44 and 75 having the stepped outer surface is moved by the electromagnetic actuator 48 or 82, but may be moved by the electric motor as in the first embodiment.

This application is based on prior Japanese Patent Applications No. 2003-093186 filed on March 31, 2003; and No. 2004-065059 filed on March 9, 2004. The entire contents of these Japanese Patent Applications Nos. 2003-093186 and 2004-065059 are hereby incorporated by reference. [089] Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. An energy absorbing steering column assembly comprising:
first and second members one of which is an immovable member to be supported on a vehicle body, and the other of which is a movable member to move in a first direction relative to the immovable member when impact load is applied;
a holding member mounted on the first member and formed with an elongate hole;
a sliding shaft mounted on the second member and arranged to slide forcibly in the elongate hole to absorb impact energy when the movable member moves in the first direction relative to the immovable member, the sliding shaft including a portion having cross sections of different sizes; and
an actuating mechanism to shift the position of the sliding shaft inserted in the elongate hole.

2. The steering column assembly as claimed in Claim 1, wherein the holding member and the sliding shaft form an energy absorbing mechanism which absorbs impact energy by frictional resistance and plastic deformation between the sliding shaft and the elongate hole caused by forcible sliding movement of the sliding shaft in an elongate direction in which the elongate hole is elongated; the sliding shaft includes a smaller portion having a smaller sectional size and a larger portion having a larger sectional size larger than the smaller sectional size; and the actuating mechanism is arranged to shift the position of the sliding shaft in an axial direction of the sliding shaft passing through the elongate hole, from a first position at which the smaller portion of the sliding shaft is positioned within the elongate hole, to a second position at which the larger portion of the sliding shaft is positioned within the elongate hole.

3. The energy absorbing steering column assembly as claimed in Claim 1, wherein one of the cross sections of the sliding shaft contacts opposite edges of the elongate hole elongated in an elongate direction when the sliding shaft slides forcibly in the elongate hole in the elongate direction, and thereby subjects the opposite edges to frictional resistance so that the opposite edges undergo plastic deformation in accordance with the size of the one of the cross sections.

4. The energy absorbing steering column assembly as claimed in Claim 1, wherein the movable member and the immovable member form a steering column to be supported on the vehicle body so as to be collapsible by the the impact load.

5. The energy absorbing steering column assembly as claimed in Claim 1, wherein the holding member is provided on the immovable member, and the sliding shaft is connected with the movable member.

6. The energy absorbing steering column assembly as claimed in Claim 1, wherein the sliding shaft is formed with a tapered outer surface.

7. The energy absorbing steering column assembly as claimed in Claim 1, wherein the sliding shaft is formed with a stepped outer surface.

8. The energy absorbing steering column assembly as claimed in Claim 1, wherein the actuating mechanism includes:
a shaft shifting member actuator provided on the movable member; and
a shaft shifting member actuated by the shaft shifting member actuator so as to shift the position of the sliding shaft in an axial direction of the sliding shaft passing through the elongate hole.

9. The energy absorbing steering column assembly as claimed in Claim 8, wherein the shaft shifting member actuator is an electric motor controlled in accordance with an information signal representing the position of the sliding shaft in the elongate hole, and the shaft shifting member is a gear mechanism to shift the position of the sliding shaft in the axial direction with a torque generated by the electric motor.

10. The energy absorbing steering column assembly as claimed in Claim 8, wherein the shaft shifting member actuator is an electromagnetic actuator, and the shaft shifting member is an actuation rod actuated by the electromagnetic actuator so as to shift the position of the sliding shaft in the axial direction.

11. The energy absorbing steering column assembly as claimed in Claim 8 further comprising a controlling section including a sensor section to sense an operating condition and a controller to control an amount of insertion of the sliding shaft in the elongate hole by controlling the actuator in accordance with the operating condition.

12. The energy absorbing steering column assembly as claimed in Claim 11, further comprising a position sensor sensing the position of the sliding shaft in the elongate hole, and the controller controls the shaft shifting member actuator in accordance with the position of the sliding shaft in the elongate hole.

13. The energy absorbing steering column assembly as claimed in Claim 1, wherein the holding member is provided on the movable member, and the sliding shaft is connected with the immovable member.

14. The energy absorbing steering column assembly as claimed in Claim 13, wherein the immovable member includes a holding part slidably guiding and holding the holding member.

15. The energy absorbing steering column assembly as claimed in Claim 14, wherein the sliding shaft is passed through the holding part so that the sliding shaft is inserted in the elongate hole at a position within the holding part.

16. The energy absorbing steering column assembly as claimed in Claim 14, further includes a second holding part slidably guiding and holding the holding member at a position spatially separated from the holding part.

17. The energy absorbing steering column assembly as claimed in Claim 1, further comprising a portion mounted on the movable member and defining a support hole to support the sliding shaft movably in the axial direction, and to provide the sliding shaft with a force to move in the elongate hole in the elongate direction when the impact load is applied to the movable member.

18. The energy absorbing steering column assembly as claimed in Claim 1, wherein the elongate hole includes a narrow hole portion elongated in an elongate direction, and an enlarged hole portion to normally receive the sliding shaft inserted in the elongate hole and to allow the sliding shaft to slide in the elongate direction from the enlarged hole portion forcibly into the narrow hole portion when the impact load is applied to the movable member.

19. The energy absorbing steering column assembly as claimed in Claim 18, wherein the sizes of the cross sections of the sliding shaft are larger than a width between opposite edges of the narrow hole portion elongated in the elongate direction and smaller than a sectional size of the second hole portion, the sectional size being larger than the width between the opposite edges.

20. An energy absorbing steering column assembly comprising:
first and second members one of which is an immovable member to be supported on a vehicle body, and the other of which is a movable member to move in a first direction relative to the immovable member when impact load is applied; and
an energy absorbing system to absorb impact energy in case of a collision of a vehicle, the energy absorbing system comprising,
a holding member mounted on the first member and formed with an elongate hole elongated in the first direction;
a sliding shaft mounted on the second member, extended through the elongate hole in a second direction crossing the first direction and arranged to slide forcibly in the elongate hole to absorb impact energy by frictional resistance and plastic deformation between the sliding shaft and the elongate hole when the movable member moves in the first direction relative to the immovable member, the sliding shaft including a smaller portion having a smaller sectional size and a larger portion having a larger sectional size larger than the smaller sectional size;
an actuating mechanism to shift a position of the sliding shaft in the second direction, between a first shaft position at which the smaller portion of the sliding shaft is positioned within the elongate hole, and a second shaft position at which the larger portion of the sliding shaft is positioned within the elongate hole, and
a controlling section to control the position of the sliding shaft in the elongate hole by controlling the actuating mechanism in accordance with an operating condition indicative of a magnitude of the impact load.
